(19)

Europäisches
Patentamt

European
Patent Office

Office européen
des brevets

(11) **EP 1 641 586 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(21) Anmeldenummer: **04740447.0**

(22) Anmeldetag: **30.06.2004**

(51) Int Cl.:
**B23K 9/08** (2006.01)   **B23K 20/12** (2006.01)

(86) Internationale Anmeldenummer:
**PCT/EP2004/007064**

(87) Internationale Veröffentlichungsnummer:
**WO 2005/002774 (13.01.2005 Gazette 2005/02)**

(54) **VERFAHREN UND VORRICHTUNG ZUM PRESSSCHWEISSEN MIT BERÜCKSICHTIGEN DER LÄNGENABWEICHUNGEN DER WERKSTÜCKE**

METHOD AND DEVICE FOR PRESSURE WELDING, WHICH TAKES INTO ACCOUNT DEVIATIONS IN THE LENGTH OF WORKPIECES

PROCEDE ET DISPOSITIF POUR SOUDER PAR PRESSION EN TENANT COMPTE DES ECARTS DE LONGUEUR DES PIECES

(84) Benannte Vertragsstaaten:
**DE GB**

(30) Priorität: **03.07.2003 DE 10330188**

(43) Veröffentlichungstag der Anmeldung:
**05.04.2006 Patentblatt 2006/14**

(73) Patentinhaber: **KUKA Schweissanlagen GmbH 86165 Augsburg (DE)**

(72) Erfinder:
- **GOLDSTEIN, Christian
  86316 Friedberg (DE)**
- **MENZINGER, Manfred
  86438 Kissing (DE)**

(74) Vertreter: **Ernicke, Hans-Dieter et al
Patentanwälte
Dipl.-Ing. H.-D. Ernicke
Dipl.-Ing. Klaus Ernicke
Schwibbogenplatz 2b
86153 Augsburg (DE)**

(56) Entgegenhaltungen:
**EP-A- 0 488 518        US-A- 2 988 936
US-A- 3 732 613        US-A- 3 998 373**

- **PATENT ABSTRACTS OF JAPAN Bd. 016, Nr. 087 (M-1217), 3. März 1992 (1992-03-03) & JP 3 268884 A (TOSHIBA MACH CO LTD), 29. November 1991 (1991-11-29)**

# EP 1 641 586 B1

**Beschreibung**

Die Erfindung betrifft ein Verfahren und eine Vorrichtung zum Pressschweißen mit den Merkmalen im Oberbegriff der Hauptansprüche 1 und 13 (siehe, z.B. US.A.3 998 373).

Derartige Verfahren und Vorrichtungen sind aus der Praxis in verschiedenen Ausführungen, z.B. als Reibschweißmaschinen oder Magnetarc-Schweißmaschiwen bekannt. Die Pressschweißprozesse sind unter Einhaltung der geforderten Schweißgüte in der Praxis beherrschbar, wenn sich die Längentoleranzen der zu verschweißenden Werkstücke oder Bauteile in relativ engen Grenzen bewegen und die Gesamtlänge des geschweißten Bauteils keinen engeren Toleranzen unterliegt. Probleme entstehen, wenn die Toleranzvorgaben für die Einzellängen der zu verschweißenden Werkstücke gelockert und/oder zugleich die Toleranzen für die Gesamtlänge des fertigen, geschweißten Bauteils verschärft werden. In der Praxis werden z.B. beim Reibschweißen und insbesondere beim relativen Zeit-Reiben oder Weg-Reiben für die jeweilige Applikation entsprechende konstante Vorgaben für die Reibzeit oder den Reibweg eingestellt, wobei die Vorgabe ab Bauteilberührung und unabhängig von der Ausgangslage der Werkstücke abläuft. Je nach Länge der Bauteile vor dem Schweißen ergeben sich Gesamtlängen, die um den Ausgangslagenfehler von der geforderten Länge nach dem Reibschweißen abweichen. Dies bedeutet, dass die geschweißten Bauteile bei großen noch tolerierbaren Ausgangslagenfehlern entweder zu kurz oder zu lang sind.

Zur Behebung dieses Problems ist es aus der Praxis beim Reibschweißen bekannt, auf einen bestimmten absoluten Weg zu reiben. Hierbei werden die beiden Werkstücke nach dem Bauteilkontakt so lange aneinander gerieben, bis eine voreingestellte Schlittenposition erreicht ist. Nach Erreichen dieser Position wird auf Stauchdruck umgeschaltet, wobei der Stauchhub mit vorgegebener Kraft und ohne Steuerung des Stauchwegs durchgeführt wird. Bei dieser Variante besteht jedoch die Gefahr, dass bei zu kurzen Bauteilen und einem späten Bauteilkontakt der Reibweg nicht lang genug ist. Hierbei wird im Verhältnis zu wenig Reibenergie eingebracht, was wegen unzureichender Plastifizierung zu einer geringeren Stauchverkürzung und dadurch zu einer übergroßen Gesamtlänge des geschweißten Bauteils führt. Bei zu langen Werkstücken verhält es sich umgekehrt. Der durch frühen Bauteilkontakt verlängerte Reibweg führt zu einer höheren Reibenergie und stärkeren Plastifizierung der Werkstücke im Kontaktbereich, was beim anschließenden Stauchhub eine Bauteilverkürzung nach sich zieht.

Beim Kurzzeit-Reibschweißen wird der größte Teil der benötigten Energie beim Abbremsen der Spindel eingebracht. Die Reibzeiten betragen in der Regel zwischen 0 und ca. 0,5 Sekunden. Diese Parametervariante wird in der Regel für Buntmetallschweißungen, für deren Kombinationen untereinander und für Kombinationen von Buntmetall mit Stahl angewendet. Die Bauteillänge nach dem Schweißen wird hier auch über den Stauchdruck bzw. die Stauchkraft eingestellt. Es ergeben sich die gleichen Probleme wie bei den anderen Pressschweißverfahren, wenn die Endtoleranzen verschärft und zugleich die Ausgangstoleranzen der Einzelbauteile gelockert werden.

Die DE 34 13 203 C2 offenbart ein Verfahren zur Regelung eines Schwungkraft- oder Reibschweißvorgangs. Bei dieser Schrift werden der Vorschubweg bzw. das sog. Stauchmaß oder die Vorschubzeit während der Anreib- und Stauchphase stets konstant gehalten und bei Auftreten von Prozessanomalitäten nachgeregelt. Dies geschieht durch eine Beeinflussung und Veränderung des Pressdrucks. Die Referenz- oder Sollwerte für den Vorschubweg oder die Vorschubzeit werden aus Testschweißungen gewonnen. Sie bleiben im Serienbetrieb gleich und werden nicht verändert. Beim Serienschweißen erfolgt eine interne Regelung der Istwerte von Weg oder Zeit des Vorschubs durch Druckänderung und auch nur während des Prozesses in Reaktion auf etwaige im Prozess entstehende Vorschub-Abweichungen. Eine Längenmessung der Bauteile vor dem Schweißen findet im Serienbetrieb nicht statt: Durch die Konstantregelung des Vorschubs können zwar Längenabweichungen der Bauteile kompensiert werden. Dies geschieht durch die starre Sollwertvorgabe nur im Bereich der Reibphase. Bei Überlänge der Bauteile hat dies eine zu stark verlängerte.Reibphase mit zu großer Plastifizierung zur Folge. Bei Unterlänge der Bauteile sind die Reibphase und die Plastifizierung zu klein. Die im Prozess vorgenommenen Änderungen des Pressdrucks sorgen für ständig veränderte Schweißbedingungen. Die Schweißqualität unterliegt dadurch unkalkulierbaren Veränderungen und kann nicht konstant gehalten werden. Die Längenkompensation der Bauteile geht dadurch zu Lasten der Schweißqualität.

Die US-A-3,998,373 befasst sich mit einer Längenkompensation für trägheitsgesteuerte Reibschweißmaschinen mit Schwungrad, bei denen die Welle mit dem einen Bauteil über einen Motor beschleunigt wird, wobei die Drehzahl ansteigt. Sobald eine bestimmte Auslösedrehzahl erreicht ist, wird der Motor abgeschaltet und der Vorschub zur Erzeugung des Stauchdrucks eingeschaltet, wobei im Reibschluss die Drehbewegung abgebremst und zum Stillstand gebracht wird. Etwaige Längenabweichungen der zu verschweißenden Bauteile werden automatisch über die Generierung eines Geschwindigkeitssteuerung-Kompensationssignals ausgeglichen. Hierfür ist eine Messeinrichtung vorhanden, in der die Gesamtlänge der beiden zu verschweißenden Bauteile gemessen und mit einem Längensollwert verglichen wird, wobei aus dem Vergleich ein Längendifferenzwert gewonnen wird. Dieser Längendifferenzwert kann nicht unmittelbar zur Steuerung der Reibschweißmaschine verwendet werden und muss erst in einen Drehzahlwert umgesetzt werden. Der sogenannte "weight factor" ist ein Proportionalfaktor, der zuvor aus einer Reihe von Probeschweißungen mit unterschiedlichen Schweißgeschwindigkeiten ermittelt wurde und mit dem die zu einer bestimmten Längendifferenz gehörige Drehzahländerung berechnet wird. Diese Drehzahländerung wird dem vorher eingestellten Sollwert für die Abschalt-Drehzahl aufaddiert, ggf. bei Unterlängen mit negativem Vorzeichen. Der Motor wird dann bei entsprechend höherer oder bei niederer Drehzahl abgeschaltet und der Stauchvorgang wird begonnen.

Die JP 3268884 A offenbart eine Reibschweißmaschine für drei Bauteile mit einer Längenkorrektur der Bauteile. Während des Reibschweißens wird eine Kühlungs-Korrekturgröße berechnet um im Vorgriff die Bauteil-Korrekturlänge einzustellen. Außerdem findet eine Messung der Gesamtlänge der Bauteile statt.

Die US-A-2,988,936 befasst sich ebenfalls mit der automatischen Kompensierung von Längenabweichungen der Bauteile beim Reibschweißen. Die Langenabweichungen werden automatisch über Nockenschalter und entsprechend abgestimmte Vorschubbewegungen eines Antriebs kompensiert. Die Bauteillängen und etwaige Längenabweichungen werden hierbei nicht gemessen.

Es ist Aufgabe der vorliegenden Erfindung, ein besseres Verfahren nebst Vorrichtung zum Pressschweißen aufzuzeigen, die den geänderten Toleranzanforderungen gerecht werden können.

Die Erfindung löst diese Aufgabe mit den Merkmalen im Verfahrens- und Vorrichtungs anspruch 1 und 13. Die Erfindung ermöglicht ein taleranzgenaues Pressschweißen von Werkstücken unter Einhaltung der geforderten Schweißgüte. Durch eine Ermittlung von etwaigen Längenabweichungen der zu verschweißenden Werkstücke kann der Eingangs-Toleranzfehler genau festgestellt und vor dem anschließenden Schweißvorgang durch Sollwertänderungen von ein oder mehreren Schweißparametern kompensiert werden. Die ermittelte Längenabweichung $\Delta 1$ wird durch eine veränderte Plastifizierung und einen geänderten Stauchhub kompensiert. Mittels eines Korrekturfaktors C kann hierbei in Abhängigkeit von der festgestellten Längenabweichung das Verteilungsverhältnis optimal eingestellt werden. Vorzugsweise wird hierbei die Werkstückplastifizierung über ein oder mehrere geeignete Prozessparameter und den Korrekturfaktor C beeinflusst. Die passende Stauchhublänge stellt sich dann im Prozess an Hand der Plastifizierungsbedingungen von selbst ein.

Das beanspruchte Verfahren und die Vorrichtung lassen sich für die unterschiedlichsten Arten von Pressschweißverfahren einsetzen. Bevorzugte Anwendungsbereiche sind das Reibschweißen und das Magnetarc-Schweißen mit magnetisch bewegtem Lichtbogen. Beim Reibschweißen können die Prozessparameter Reibweg, Reibzeit oder Stauchdruck einzeln oder in Kombination geändert werden. Beim Magnetarc-Schweißen eignen sich zum Beispiel die Zeit oder Geschwindigkeit des Lichtbogenumlaufs oder die Stauchkraft.

Für die verschiedenen Prozessparameter können jeweils angepasste Korrekturfaktoren C benutzt werden. Die Korrekturfaktoren C werden vorzugsweise applikationsabhängig in Versuchsreihen gewonnen und in einer Technologiedatenbank abgespeichert. Hierbei ist es ferner möglich, für unterschiedliche Ausgangslängen der Werkstücke oder Bauteile bzw. unterschiedliche

Längenabweichungen $\Delta l$ unterschiedliche Korrekturfaktoren C aus den Versuchen zu ermitteln und hierbei längenabhängige Grenzwerte zu bilden. Aus diesen kann im Serienbetrieb der für die jeweils anstehende Längenabweichung $\Delta l$ erforderliche Korrekturfaktor durch Interpolation zwischen den längenabhängigen Grenzwerten gewonnen werden.

In den Unteransprüchen sind vorteilhafte Ausgestaltungen der Erfindung angegeben.

Die Erfindung ist in den Zeichnungen beispielsweise und schematisch dargestellt. Im Einzelnen zeigen:

Figur 1:     eine Reibschweißvorrichtung schematischer Darstellung und Seitenansicht,

Figur 2, 3 und 4:     Bauteil- und Vorschublängen in drei unterschiedlichen Varianten für Bauteile mit korrekter, zu großer und zu kleiner Länge,

Figur 5:     ein Diagramm von Weg, Drehzahl und Stauchdruck über der Zeit beim Weg- . Reibschweißen mit Längenkompensation,

Figur 6:     ein Diagramm von Weg, Drehzahl und Stauchdruck über der Zeit beim Zeit-Reibschweißen mit Längenkompensation und

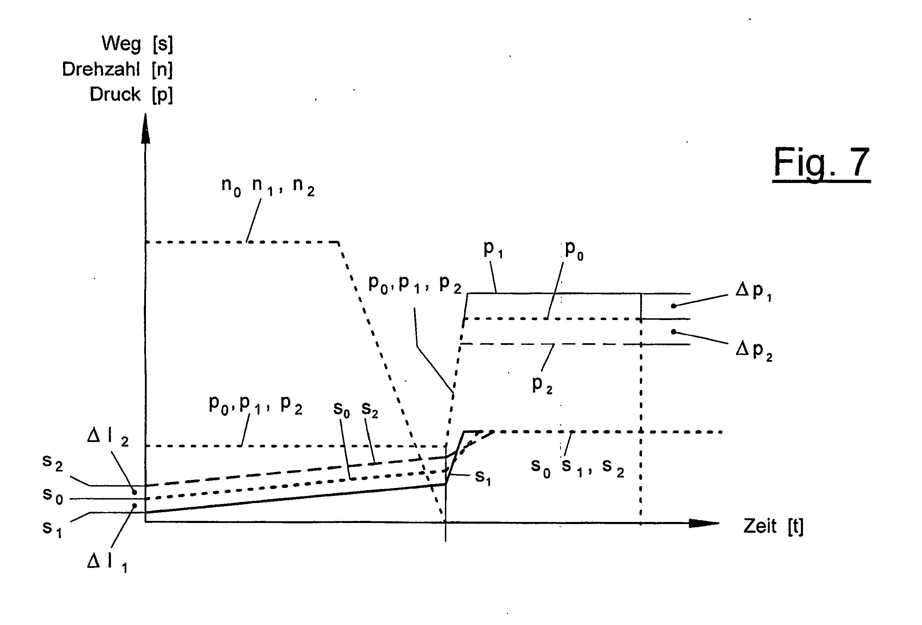

Figur 7:     ein Diagramm von Weg, Drehzahl und Stauchdruck über der Zeit beim Kurzzeit-Reibschweißen mit Längenkompensation.

Die Erfindung betrifft ein Verfahren und eine Vorrichtung (1) zum Pressschweißen von Werkstücken (2,3), die zunächst an ihren benachbarten Grenzflächen unter Erwärmung plastifiziert und anschließend durch einen Stauchhub gefügt werden. Die gezeigten Ausführungsbeispiele betreffen das Reibschweißen, wobei die Werkstücke (2,3) unter Druck und durch Drehung aneinander gerieben und durch die Reibwärme plastifiziert werden. Beim Magnetarc-Schweißen mit einem magnetisch bewegten Lichtbogen wird zwischen den auf Distanz gehaltenen Werkstücken ein Lichtbogen gezündet und durch ein Magnetfeld in umlaufende Bewegungen versetzt. Die Erwärmung der Werkstückgrenzflächen erfolgt hier durch den Lichtbogen. Ein derartiges Magnetarc-Schweißverfahren ist zum Beispiel in der DE 41 35 882 A1 beschrieben.

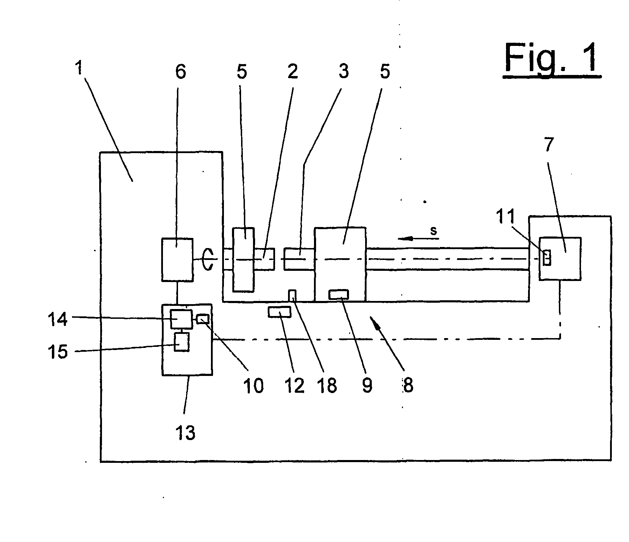

Figur 1 zeigt die Pressschweißvorrichtung in Form einer Reibschweißmaschine (1). Sie besteht aus einem Maschinengestell mit zwei beweglichen Einspannungen (5) für die beiden zu verschweißenden Werkstücke (2,3). Die eine Einspannung (5) ist mit einer Dreheinheit (6) verbunden, welche das Werkstück (2) um seine Längsachse rotieren lässt. Das andere Werkstück (3) ist mit einer axialen Vorschubeinheit (7) verbunden, mit der das Werkstück (3) gegenüber dem rotierenden Werkstück (2) in Richtung des Vorschubs s zugestellt werden kann. Die Dreheinheit (6) hat einen geeigneten Drehantrieb, z.B. einen steuer- und regelbaren Elektromotor, der die Spindel der Einspannung (5) direkt antreibt. Alternativ kann statt eines motorischen Direktantriebs ein Schwungmassenantrieb eingesetzt werden. Die Vorschubeinheit (7) hat ebenfalls einen geeigneten Antrieb, z.B. einen hydraulischen Zylinder zum Vorschub der Einspannung (5).

Die Reibschweißmaschine (1) besitzt eine Messeinrichtung (8), die in unterschiedlicher Weise ausgebildet sein kann und unterschiedliche Messelemente besitzen kann. Dies können zum Beispiel ein Wegmesser (9) für den Vorschub s des Werkstücks (3), ein Zeitmesser (10), ein Kraft- oder Druckmesser (11) an der Vorschubeinheit (7) und gegebenenfalls ein Längenmesser (12) sein. Die Dreheinheit (6) und die Vorschubeinheit (7) sowie die Messeinrichtung (8,9,10,11,12) sind mit einer Steuerung (13) der Reibschweißmaschine (1) verbunden, die eine elektronische Recheneinheit (14) mit mindestens einem Speicher (15) für Prozessparameter, Programme und andere Daten aufweist. Der Recheneinheit (14) kann der Zeitmesser (10) zugeordnet sein.

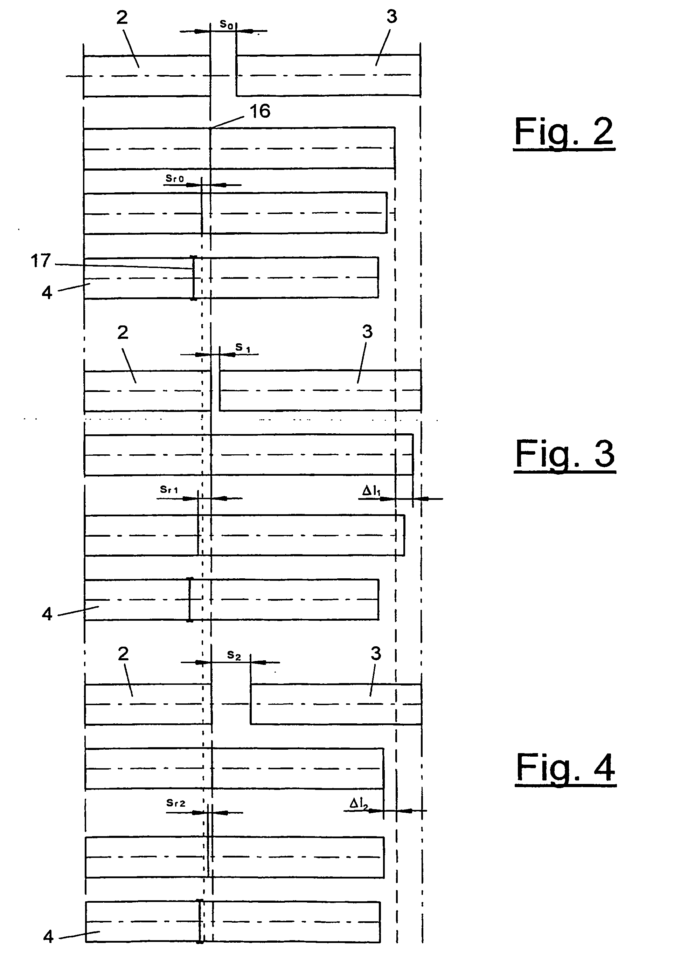

Figur 2 bis 4 verdeutlichen unterschiedliche Situationen hinsichtlich der Ausgangswerkstücke (2,3) und des geschweißten Bauteils (4). Figur 2 zeigt die Anordnung in der Reibschweißmaschine (1) bei zwei Werkstücken (2,3) die exakt die Soll-Länge haben. Die beiden Werkstücke (2,3) werden mit axialer Distanz zueinander zu ihren Einspannungen (5) befestigt, wobei sie an einem jeweils rückwärtigen Anschlag in der Einspannung (5) dicht anliegen, dessen Position in der Axialrichtung bzw. Vorschubrichtung s genau bekannt ist. Bei den korrekten Werkstücken (2,3) ergibt sich ein Abstand bzw. ein Vorschubweg so, um den die Vorschubeinheit (7) das Werkstück (3) axial bis zum Kontakt mit dem anderen Werkstück (2) vorschieben muss. Über den Längenmesser (12), z.B. einen Kontaktsensor, kann hierbei der Vorschubweg so genau festgestellt werden. Aus diesem Vorschubweg so und der bekannten Position der rückwärtigen Anschläge in den Einspannungen (5) lässt sich die genaue Länge der beiden Werkstücke (2,3) in Kontaktposition ermitteln. Alternativ kann man die Ausgangslänge der beiden Werkstücke (2,3) auch auf beliebige andere geeignete Weise ermitteln.

Sobald die beiden Werkstücke (2,3) gemäß der zweiten Darstellung von Figur 2 am sogenannten Nullpunkt (16) Kontakt miteinander haben, werden sie mit ihren Berührungsflächen unter Druck relativ zueinander gedreht. Hierbei wird das Werkstück (3) durch die Vorschubeinheit (7) über den Reibweg $s_{r0}$ weiter vorgeschoben. Beim Weg-Reibschweißen wird der Reibweg $s_{r0}$ als Prozessparameter eingestellt. Bei der Alternative des Zeit-Reibschweißens wird die Reibzeit to bei gegebenen und vorzugsweise konstantem Reibdruck bzw. Vorschubkraft als Prozessparameter eingestellt. Sobald der vorgegebene Reibweg $s_{r0}$ oder die vorgegebene Reibzeit to zurückgelegt sind, wird die Drehbewegung gestoppt und das Werkstück (3) im Stauchhub axial vorwärts bewegt. Das Abschalten des Drehantriebs kann auch zu einem früheren Zeitpunkt erfolgen.

Beim Stauchhub wird das durch die Reibwärme plastifizierte Material im Kontaktbereich der Grenzflächen zumindest teilweise radial nach außen unter Bildung eines Reibschweißwulstes verdrängt, wodurch die Bauteillängen sich weiter verkürzen und die Schweißnaht (17) ein Stück weiter vom Nullpunkt (16) weg wandert. Die dritte Darstellung in Figur 2 zeigt die Werkstücksituation am Ende des Reibwegs $s_r$. Die vierte Darstellung zeigt das fertig geschweißte Bauteil (4) und dessen Länge. Der Einfachheit und Deutlichkeit halber sind die Verschiebungen und Wege entgegen der tatsächlichen Verhältnisse nur einseitig aufgetragen.

Figur 3 verdeutlicht die Situation bei Werkstücken (2,3) mit Überlänge. Im gezeigten Fall ist das Werkstück (3) länger als der Sollwert. Das andere Werkstück (2) entspricht hingegen dem Sollwert. Dies ist ebenfalls eine vereinfachte Darstellung und kann in der Praxis auch anders sein.

Wie die erste Darstellung von Figur 3 verdeutlicht, verkürzt sich durch die Überlänge der Werkstücke (2,3) der Vorschub $s_1$ aus der Ausgangsstellung bis zum Kontakt der Werkstücke (2,3). Die sich hieraus durch Vergleich mit so ergebende Längenabweichung $\Delta l$ in der Gesamtlänge beider Werkstücke (2,3) ist in der zweiten Darstellung von Figur 3 verdeutlicht. Wenn das geschweißte Bauteil (4) trotz Überlänge der Werkstücke (2,3) die richtige Endlänge haben soll, muss die Längenabweichung $\Delta l_1$ beim Reibschweißvorgang kompensiert werden. Dies geschieht durch eine Sollwertänderung und einen verlängerten Reibweg $s_{r1}$. Der Reibweg $s_{r1}$ ist allerdings kleiner als die Längenabweichung $\Delta l_1$, was durch einen nachfolgend näher erläuterten Korrekturfaktor $C_s$ oder Ct für den Reibweg oder die Reibzeit eingestellt wird.

Durch den Korrekturfaktor $C_s$ oder $C_t$ für die Sollwerte der Prozessparameter beim Weg- oder Zeit-Reibschweißen wird bei der Kompensation der Längenabweichung $\Delta l_1$ berücksichtigt, dass sich bei einem verlängerten Reibweg auch der Stauchweg vergrößert. Durch den verlängerten Reibweg bzw. die längere Reibzeit wird mehr Reibenergie an der Kontaktstelle eingebracht, was zu einer höheren Plastifizierung der Grenzflächen führt, so dass bei dem mit konstanter Kraft ausgeführten Stauchhub mehr Material aus dem Kontaktbereich verdrängt werden kann, was die Länge des Stauchhubs vergrößert.

Figur 4 verdeutlicht den anderen Fall der Unterlänge von beiden Werkstücken (2,3) und dem entsprechend verlängerten Vorschub s2. Die Längenabweichung $\Delta l_2$ beider Werkstücke (2,3) ist zur Unterscheidung von der Überlänge mit einem negativen Vorzeichen versehen. Der Reibweg $s_{r2}$ ist bei Unterlänge kürzer als bei korrekter Soll-Länge der Werkstücke (2,3) oder bei Überlänge. Der Reibweg oder die Reibzeit werden allerdings durch den Korrekturfaktor $C_s$ oder Ct so groß bemessen, dass die Erwärmung und Plastifizierung der Werkstücke (2,3) ausreichend groß ist, um in Verbindung mit dem gegenüber den anderen Ausführungsbeispielen entsprechend verkürzten Stauchhub zu einer korrekten Gesamtlänge des geschweißten Bauteils (4) zu kommen .

Der Korrekturfaktor $C_s$ oder $C_t$ hat somit in den beschriebenen Fällen auch die Funktion eines Verteilfaktors, der den Anteil der Änderung von Reibweg und Stauchweg oder von Reibzeit und Stauchzeit bei der Kompensation der Längenabweichung $\Delta l_1$ festlegt.

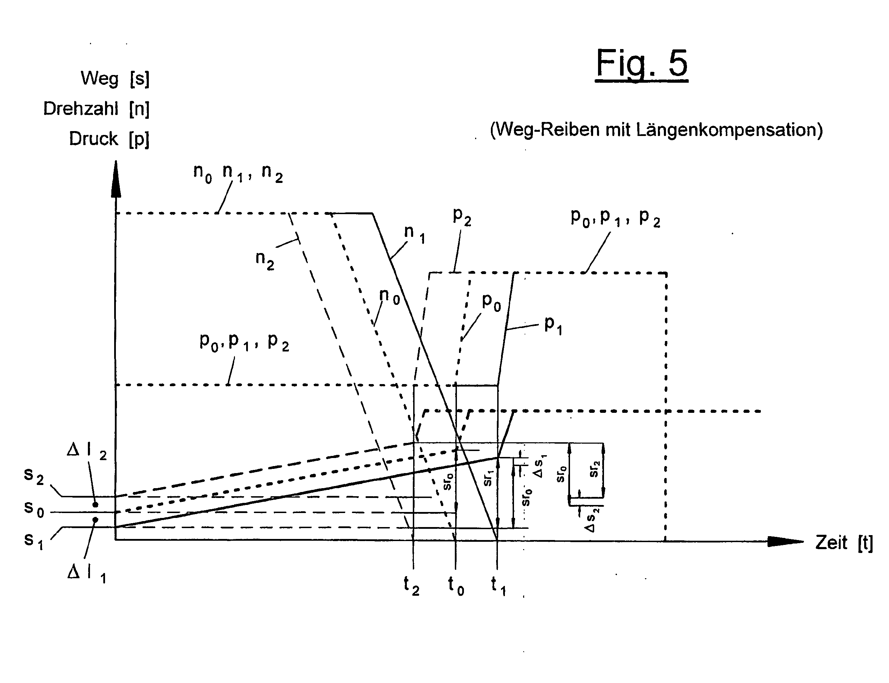

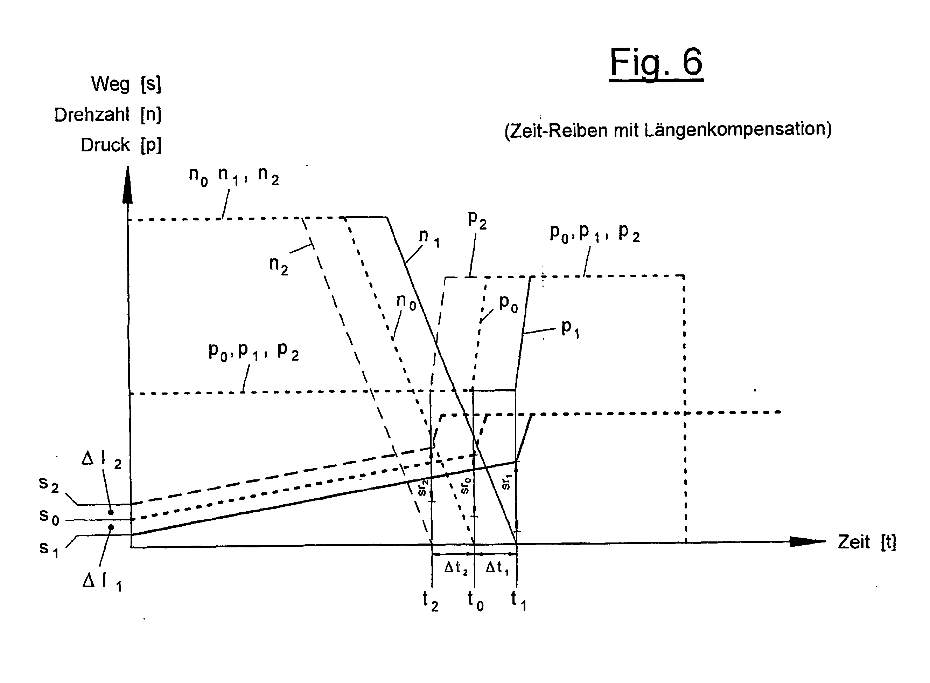

In den Diagrammen von Figur 5 und 6 sind die Verhältnisse von Weg s des Vorschubs und des Werkstücks (3), der Drehzahl n des gedrehten Werkstücks (2) und des Stauchdrucks oder der Stauchkraft p der Vorschubeinheit (7) über der Zeit aufgetragen. Die Werte $s_1$, $n_1$ und $p_1$ geben hierbei die Verhältnisse bei Überlänge der Werkstücke (2,3) an. Die Werte $s_2$, $n_2$ und $p_2$ stehen für die andere Variante der Unterlänge der Werkstücke (2,3). Die Werte $s_0$, $n_0$ und $p_0$ repräsentieren die normalen Verhältnisse bei Soll-Länge der Werkstücke (2,3)

Bei dem im Diagramm von Figur 5 dargestellten Fall des Weg-Reibschweißens wird die Längenabweichung $\Delta l_1$, $\Delta l_2$ durch eine Veränderung des Reibwegs $s_r$ bzw. des entsprechenden Vorschubs der Vorschubeinheit (7) in Verbindung mit dem anschließenden Stauchhub kompensiert. Hierbei gelten folgende Bedingungen:

$$s_{r1}=s_{r0}+\Delta s_1$$

$$s_{r2}=s_{r0}+\Delta s_2.$$

$\Delta s_1$ gibt die Reibwegänderung bei Überlänge der Werkstücke (2,3) an und führt zu einem verlängerten Reibweg $s_{r1}$. $\Delta s_2$ trifft die Reibwegänderung bei Unterlänge und hat dementsprechend ein negatives Vorzeichen, was einen verkürzten Reibweg $s_{r2}$ zur Folge hat.

Die erforderlichen Reibwegänderungen werden unter Berücksichtigung des Korrekturwerts $C_s$ nach folgender Formel berechnet:

$$\Delta s_1=\Delta l_1 * C_s$$

$$\Delta s_2=\Delta l_2 * C_s.$$

Die Längenabweichungen $\Delta l_1$ und $\Delta l_2$ sind vorzeichenabhängig. Bei Unterlänge ergibt sich ein negatives Vorzeichen.

Bei dem in Figur 6 verdeutlichten Zeit-Reibschweißen mit Längenkompensation wird der Prozessparameter der Reibzeit t eingestellt und verändert, wobei sich ein entsprechender Reibweg nebst Stauchweg ergeben. Hierfür gelten folgende Formeln:

$$t_1=t_0+\Delta t_1$$

$$t_2=t_0+\Delta t_2.$$

In diesen Fällen ist to die bei Soll-Länge der Werkstücke (2,3) geltende Reibzeit. $t_1$ und $t_2$ sind die verlängerten oder verkürzten Reibzeiten bei Über- oder Unterlänge der Werkstücke (2,3).

Die Reibzeitänderungen $\Delta t$ berechnen sich wie folgt:

$$\Delta t_1 = \Delta l_1 * C_t$$

$$\Delta t_2 = \Delta l_2 * C_t.$$

Ein Vergleich der Diagramme von Figur 5 und 6 zeigt, dass die eintretenden Kompensationen beim Weg-Reibschweißen und beim Zeit-Reibschweißen qualitativ gleich sind. In beiden Fällen ergibt sich je nach Längenabweichung $\Delta l$ eine gleiche Verlängerung oder Verkürzung der Reib- und Stauchwege, die nur im einen Fall weg-gesteuert und im anderen Fall zeit-gesteuert erreicht wird.

Für bestimmte Materialkombinationen, insbesondere Buntmetalle in Reinform, in Mischform mit anderen Buntmetallen oder in Mischform mit Stahl oder anderen Werkstoffen eignet sich ein drittes Reibschweißverfahren, das sogenannte Kurzzeit-Reibschweißen. Ein solches Schweißverfahren ist zum Beispiel in der WO 97/01412 beschrieben. Die beiden Werkstücke (2,3) werden hierbei nur über eine sehr kurze Zeit bzw. über einen begrenzten Drehwinkel im Reibschluss gedreht und anschließend gestaucht. Als Prozessparameter eignet sich in diesem Fall die Stauchkraft oder bei hydraulischen Vorschubeinheiten (7) der Stauchdruck. Zur Kompensation von Längenabweichungen $\Delta l_1$, $\Delta l_2$ wird die Stauchkraft bzw. der Stauchdruck verändert, wobei die Reibzeit oder der Reibwinkel unabhängig von der Werkstücklänge gleich bleibt. Eine Überlänge der Werkstücke (2,3) wird durch eine Erhöhung von Stauchkraft/Stauchdruck und eine Unterlänge durch Minderung von Stauchkraft/Stauchdruck kompensiert. Die Stauchwege ändern sich entsprechend, so dass die geschweißten Bauteile (4) trotz unterschiedlicher Einzellängen der Werkstücke (2, 3) am Ende wieder die korrekte Soll-Länge haben.

Hierbei gelten folgende Formeln:

$$p_1 = p_0 + \Delta p_1$$

$$p_2 = p_0 + \Delta p_2$$

$p_0$, $p_1$ und $p_2$ sind die Werte für Stauchkraft/Stauchdruck bei Soll-Länge, Überlänge und Unterlänge der Werkstücke (2,3). $\Delta p_1$ und $\Delta p_2$ betreffen die Änderung von Stauchkraft/Stauchdruck bei Überlänge und Unterlänge, wobei für $\Delta p_2$ wieder entsprechend der Längenabweichung $\Delta l_2$ ein negatives Vorzeichen gilt.

Die Änderungen von Stauchkraft/Stauchdruck berechnen sich wie folgt:

$$\Delta p_1 = \Delta l_1 * C_p$$

$$\Delta p_2 = \Delta l_2 * C_p.$$

Die Korrekturwerte $C_s$, $C_t$ und $C_p$, die nachfolgend summarisch als Korrekturwert C bezeichnet werden, werden vorzugsweise empirisch in Versuchsreihen gewonnen und dabei auf die jeweils gültige Längenabweichung $\Delta l$ bezogen. In den Versuchsreihen werden die Korrekturfaktoren C applikationsabhängig und vorzugsweise an Hand von Probe-Werkstücken aus der Seriencharge ermittelt. Die Versuchsreihen werden getrennt nach den verschiedenen Pressschweißverfahren, zum Beispiel dem Weg-, Zeit- oder Kurzzeit-Reibschweißverfahren durchgeführt. Innerhalb der Versuchsreihen werden bei jeweils mehreren Probestücken mit gegebener Soll-Länge, Überlänge und Unterlänge die Änderungen von Reibweg, Reibzeit und Stäudhkfaft/Stäuchhub stufenweise variiert und die geschweißten Bauteile (4) anschließend auf ihre Gesamtlänge und Toleranzabweichung sowie zusätzlich auch auf die Schweißgüte geprüft. Für die Schweißgüte werden entsprechende Tests durchgeführt. Aus den Versuchsreihen ergibt sich, welche Änderungen von Reibweg, Reibzeit und Stauchkraft/Stauchdruck mit Bezug auf die Soll-Länge und eine bestimmte Über- und Unterlänge zu korrekten Endlängen und Schweißgüten der Bauteile (4) führen. Die Korrekturfaktoren C werden hierbei aus dem jeweiligen Verhältnis der korrekten Änderungen von Reibweg, Reibzeit und Stauchkraft/Stauchdruck zu gegebener Längenabweichung Δl berechnet. Die Korrekturfaktoren können sich hierbei in vielen Fällen als Konstanten ergebeben, die für alle im vorgegebenen Toleranzbereich liegenden Längenabweichungen Δl im Wesentlichen gleich bleiben. Falls die Korrekturwerte C variieren, werden Ober- und Untergrenzen für die jeweils zugehörigen maximalen Längenabweichungen Δl für Über- und Unterlänge ermittelt, zwischen denen im späteren Serienbetrieb interpoliert werden kann. Die ermittelten Korrekturwerte C werden im Datenspeicher (15) der Steuerung (13) abgelegt, gegebenenfalls als Wertepaar zusammen mit der Längenabweichung Δl, für die sie gelten. Für die verschiedenen Applikationen und die differierenden Reibschweißverfahren werden die Korrekturwerte C getrennt ermittelt und gespeichert.

Im Serienbetrieb wird in der Pressschweißvorrichtung (1) zunächst die tatsächliche Länge der Werkstücke (2,3) und eine eventuelle Längenabweichung Δl durch den Längenmesser (12) ermittelt und an die Steuerung (13) gemeldet. Die Recheneinheit (14) fragt den gespeicherten zugehörigen Korrekturwert C ab und berechnet an Hand dessen die erforderliche Sollwert-Änderung für Reibweg, Reibzeit oder Stauchkraft/Stauchhub und steuert dann den Reibschweißvorgang entsprechend. Wenn bei den verschiedenen Pressschweißprozessen bestimmte Schweißprogramme gefahren werden, können die Korrekturwerte C in diesen Schweißprogrammen als Programmparameter abgelegt und gespeichert werden.

In den beschriebenen Ausführungsbeispielen werden die beeinflussten Prozessparameter in einer einfachen linearen Funktion mit konstanten Korrekturwerten C verändert. Dies genügt für viele Einsatzfälle. Für andere und ggf. komplizierte Einsatzfälle ist es alternativ möglich, die beeinflussten Prozessparameter in ihrer Charakteristik, insbesondere mit einem zeitlich und/oder örtlich variierendenden Parameterprofil zu verändern. Dies kann sich z.B. bei den vorerwähnten Schweißprogrammen anbieten. Die Korrekturwerte C können variabel und zudem nicht linear veränderlich sein, indem sie z.B. eine Funktion der Zeit und/oder des Wegs darstellen.

Im Serien-Schweißbetrieb können die eingestellten Prozessparameter und Korrekturwerte C sowie die permanent oder zeitweise ermittelten Messwerte von Vorschubweg(en) (z.B. bis Bauteilkontakt, bis Ende des Reibwegs und bis Ende des Stauchhubs), Bauteillängen, Längenabweichung Δl, Zeit, Stauchkraft/Stauchdruck etc. mit Zuordnung zu den einzelnen Werkstücken von der Steuerung protokolliert und gespeichert werden. Dies ist zum einen für die Qualitätsprüfung und -dokumentation von Vorteil.

Die gespeicherten Werte können darüber hinaus auch zur Prozessüberwachung und ggf. auch zur Prozessregelung untereinander verglichen werden, um eine Maschinendrift oder andere temporär im Betrieb auftretende und ggf. variable Fehler feststellen und beheben zu können. Wenn z.B. bei einer Bauteilcharge die Bauteillängen bzw. die Längenabweichungen Δl nur in engen Grenzen variieren und wenn trotzdem die Gesamtvorschubwege stärker voneinander abweichen, spricht dies für eine Drift im Bauteilmaterial oder im Prozessverhalten, die z.B. durch eine von der Steuerung anhand eines Überwachungs- und Regelungsprogramms automatisch durchgeführte Korrektur eines Prozessparameters und/oder eines Korrekturwerts C behoben werden kann.

Zusätzlich kann eine Plausibilitätsüberwachung der Schweißprozesse und der eingestellten Prozessparameter bzw. Korrekturwerte C durchgeführt werden, um Fehlschweißungen sicher zu verhindern. Zudem kann in der Pressschweißmaschine (1) ein Anschlag (18) vorhanden sein, mit dem der Vorschub und insbesondere der Stauchhub auf einen Maximalwert begrenzt wird.

Abwandlungen der beschriebenen Ausführungsformen sind in verschiedener Weise möglich. Dies betrifft zum einen die Art der Pressschweißverfahren und der dafür eingesetzten Vorrichtungen (1). Zum anderen können je nach Schweißtechnik auch andere Prozessparameter eingestellt und unter Berücksichtigung von Korrekturwerten C verändert werden Vorzugsweise wird bei dem Pressschweißverfahren nur ein Prozessparameter zu Kompensation von Längenabweichungen Δl verändert. Alternativ können mehrere Prozessparameter verändert werden.

BEZUGSZEICHENLISTE

| | |
|---|---|
| 1 | Pressschweißmaschine, Reibschweißmaschine |
| 2 | Werkstück |
| 3 | Werkstück |
| 4 | geschweißtes Bauteil |
| 5 | Einspannung |
| 6 | Dreheinheit |
| 7 | Vorschubeinheit |
| 8 | Messeinrichtung |
| 9 | Wegmesser |
| 10 | Zeitmesser |
| 11 | Kraftmesser |
| 12 | Längenmesser, Kontaktsensor |

13 Steuerung
14 Recheneinheit
15 Speicher
16 Nullpunkt
17 Schweißnaht
18 Anschlag

$\Delta l_1$ Längenabweichung von Soll-Länge, Überlänge
$\Delta l_2$ Längenabweichung von Soll-Länge, Unterlänge
s Vorschub
$s_0$ Vorschub bis Nullpunkt bei Soll-Länge der Werkstücke
$s_1$ Vorschub bei Überlänge der Werkstücke
$s_2$ Vorschub bei Unterlänge der Werkstücke
C Korrekturfaktor
$C_s$ Korrekturfaktor Weg
$C_t$ Korrekturfaktor Zeit
$C_p$ Korrekturfaktor Stauchkraft/Stauchdruck
$sr_0$ Reibweg bei Soll-Länge der Werkstücke
$sr_1$ Reibweg bei Überlänge
$sr_2$ Reibweg bei Unterlänge
$\Delta s_1$ Reibwegänderung bei Überlänge
$\Delta s_2$ Reibwegänderung bei Unterlänge
$\Delta t_1$ Reibzeitänderung bei Überlänge
$\Delta t_2$ Reibzeitänderung bei Unterlänge
$\Delta p_1$ Stauchkraftänderung bei Überlänge
$\Delta P_2$ Stauchkraftänderung bei Unterlänge

**Patentansprüche**

1. Verfahren zum Pressschweißen, vorzugsweise Reibschweißen oder Magnetarc-Schweißen von Werkstücken (2,3), wobei die Ist-Länge eines oder beider Werkstücke (2,3) und eine eventuelle Längenabweichung $\Delta l$ von einem Sollwert gemessen wird und dass bei Längenabweichungen der Sollwert von mindestens einem Prozessparameter geändert wird, **dadurch gekennzeichnet, dass** bei Längenabweichungen der Sollwert von mindestens einem Prozessparameter, insbesondere Reibweg, Reibzeit, Lichtbogenzeit oder Stauchkraft, geändert wird, wobei die ermittelte Längenabweichung $\Delta l$ durch eine veränderte Plastifizierung und einen geänderten Stauchhub kompensiert wird und zur Einstellung von deren Verteilungsverhältnis für die Änderung des Prozessparameters ein Korrekturfaktor C ermittelt wird, mit dem die Längenabweichung $\Delta l$ multipliziert wird.

2. Verfahren nach Anspruch 1, **dadurch gekennzeichnet, dass** der Korrekturfaktor C empirisch in Versuchsreihen gewonnen wird.

3. Verfahren nach Anspruch 1 oder 2, **dadurch gekennzeichnet, dass** der Korrekturfaktor C applikationsabhängig ermittelt wird.

4. Verfahren nach Anspruch 1, 2 oder 3, **dadurch gekennzeichnet, dass** die Versuchsreihen applikationsspezifisch an Probe-Werkstücken aus der Seriencharge durchgeführt werden.

5. Verfahren nach einem der vorhergehenden Ansprüche, **dadurch gekennzeichnet, dass** bei der Ermittlung des Korrekturfaktors C die Schweißgüte berücksichtigt wird.

6. Verfahren nach einem der vorhergehenden Ansprüche, **dadurch gekennzeichnet, dass** Ober- und Untergrenzen für Längenabweichungen $\Delta l$ und für zugehörige Korrekturfaktoren C ermittelt und gespeichert werden, wobei im Schweißbetrieb der Korrekturfaktor C für gemessene Längenabweichungen $\Delta l$ in diesem Bereich durch Interpolation ermittelt wird.

7. Verfahren nach einem der vorhergehenden Ansprüche, **dadurch gekennzeichnet, dass** beim Reibschweißen mit einer Reibweg-Steuerung eine Reibweg-Änderung $\Delta s$ als Produkt eines Korrekturfaktors $C_s$ mit der Längenabwei-

chungen Δl berechnet wird.

8. Verfahren nach einem der vorhergehenden Ansprüche, **dadurch gekennzeichnet, dass** beim Reibschweißen mit einer Reibzeit-Steuerung eine Reibzeit-Änderung Δt als Produkt eines Korrekturfaktors $C_t$ mit der Längenabweichungen Δl berechnet wird.

9. Verfahren nach einem der Ansprüche, 1 bis 5, **dadurch gekennzeichnet, dass** beim Reibschweißen mit einer Kurzzeit-Steuerung eine Stauchhub-Änderung Δp als Produkt eines Korrekturfaktors $C_p$ mit der Längenabweichungen Δl berechnet wird.

10. Verfahren nach Anspruch 9, **dadurch gekennzeichnet, dass** die Stauchkraft verändert wird.

11. Verfahren nach einem der vorhergehenden Ansprüche, **dadurch gekennzeichnet, dass** der Prozessparameter in seiner Charakteristik, insbesondere mit einem zeitlich und/oder örtlich variierendenden Parameterprofil verändert wird.

12. Verfahren nach einem der vorhergehenden Ansprüche, **dadurch gekennzeichnet, dass** ermittelte Korrekturwerte C mit Referenzangaben für die Werkstücke (2,3) in einer mit der Pressscheißmaschine (1) verbindbaren Datenbank gespeichert werden.

13. Vorrichtung (1) zum Pressschweißen, vorzugsweise Reibschweißen oder Magnetarc-Schweißen von Werkstücken (2,3), mit einer Vorschubeinheit (7), einer Steuerung (13) und einer Messeinrichtung (12) für die Ermittlung der Ist-Länge eines oder beider Werkstücke (2,3) und einer Längenabweichung Δl, wobei in der Steuerung (13) bei einer Längenabweichung Δl ein Sollwert von mindestens einem Prozessparameter veränderbar ist, **dadurch gekennzeichnet, dass** die Steuerung (13) eine Recheneinheit (14) zur Einstellung und Änderung von Sollwerten aufweist, wobei bei einer Längenabweichung Δl ein Sollwert von mindestens einem Prozessparameter, insbesondere Reibweg, Reibzeit, Lichtbogenzeit oder Stauchkraft veränderbar ist, wobei die ermittelte Längenabweichung Δl durch eine veränderte Plastifizierung und einen geänderten Stauchhub kompensierbar ist und zur Einstellung von deren Verteilungsverhältnis für die Änderung des Prozessparameters ein Korrekturfaktor C vorgesehen ist und wobei die Recheneinheit (14) der Steuerung (13) zur Einstellung und Änderung von Sollwerten unter Berücksichtigung des Korrekturfaktors C für mindestens einen Prozessparameter ausgelegt ist.

14. Vorrichtung (1) nach Anspruch 13, **dadurch gekennzeichnet, dass** die Steuerung (13) programmierbar ist, wobei die Recheneinheit (14) mit mindestens einem Speicher (15) verbunden ist und ein Programm zur Ermittlung, insbesondere Interpolation, des Korrekturfaktors C aus gespeicherten Vorgabewerten aufweist.

## Claims

1. A method of pressure welding, preferably the friction welding or magnetic-arc welding of workpieces (2, 3), wherein the actual length of one or both workpieces (2, 3) and a possible length deviation Δl from a nominal value are measured, and in the event of length deviations the nominal value of at least one process parameter is altered, **characterized in that** in the event of length deviations the nominal value of at least one process parameter, in particular the friction path, the friction time, the arcing time or the compressive force is altered, wherein the length deviation Δl determined is compensated by a modified plasticization and an altered compression stroke, and a correction factor **C,** by which the length deviation Δl is multiplied, is determined in order to set the distribution ratio of the said length deviation Δl for altering the process parameter.

2. A method according to Claim 1, **characterized in that** the correction factor C is obtained empirically in series of tests.

3. A method according to Claim 1 or 2, **characterized in that** the correction factor C is determined in a manner dependent upon the application.

4. A method according to Claim 1, 2 or 3, **characterized in that** the series of tests are carried out in an application-specific manner on sample workpieces from the series batch.

5. A method according to any one of the preceding Claims, **characterized in that** when the correction factor C is determined the quality of welding is taken into consideration.

**6.** A method according to any one of the preceding Claims, **characterized in that** upper and lower limits for length deviations ∆l and for associated correction factors **C** are determined and stored, the correction factor **C** for measured length deviations ∆l in this range being determined by interpolation in the welding procedure.

**7.** A method according to any one of the preceding Claims, **characterized in that** during the friction welding with a friction-path control a friction-path modification ∆s is calculated as the product of a correction factor **Cs** with the length deviations ∆l.

**8.** A method according to any one of the preceding Claims, **characterized in that** during the friction welding with a friction-time control a friction-time modification ∆**t** is calculated as the product of a correction factor **Ct** with the length deviations ∆**l.**

**9.** A method according to any one of Claims 1 to 5, **characterized in that** during the friction welding with a short-time control a compression-stroke modification ∆**p** is calculated as the product of a correction factor **Cp** with the length deviations ∆l.

**10.** A method according to Claim 9, **characterized in that** the compressive force is modified.

**11.** A method according to any one of the preceding Claims, **characterized in that** the process parameter is modified in its characteristic, in particular with a parameter profile varying in time and/or in place.

**12.** A method according to any one of the preceding Claims, **characterized in that** determined correction factors **C** are stored with reference data for the workpieces (2, 3) in a database connectable to the pressure-welding machine (1).

**13.** A device for pressure welding, preferably the friction welding or magnetic-arc welding of workpieces (2, 3), with a feed unit (7), a control means (13) and a measuring device (12) for determining the actual length of one or both workpieces (2, 3) and a length deviation ∆l, wherein a nominal value of at least one process parameter is capable of being modified in the control means (13) in the event of a length deviation ∆l, **characterized in that** the control means (13) has an arithmetic unit (14) for setting and altering nominal values, wherein a nominal value of at least one process parameter, in particular the friction path, the friction time, the arcing time or the compressive force, is capable of being modified in the event of a length deviation ∆l, wherein the length deviation ∆l determined is capable of being compensated by a modified plasticization and an altered compression stroke, and a correction factor **C** is provided in order to set the distribution ratio of the said length deviation ∆l for altering the process parameter, and wherein the arithmetic unit (14) of the control means (13) is designed in order to set and alter nominal values whilst taking into consideration the correction factor **C** for at least one process parameter.

**14.** A device according to Claim 13, **characterized in that** the control means (13) is programmable, the arithmetic unit (14) being connected to at least one memory (15) and having a program for determining, in particular for interpolating, the correction factor **C** from stored pre-set values.

**Revendications**

**1.** Procédé de soudage par pression, de préférence de soudage par friction ou de soudage à l'arc magnétique, de pièces (2, 3) en mesurant la longueur réelle d'une ou de deux pièces (2, 3) et un écart ∆l éventuel de longueur par rapport à une valeur de consigne et en modifiant, s'il y a des écarts de longueur, la valeur de consigne par au moins un paramètre opératoire, **caractérisé en ce que**, s'il y a des écarts de longueur, on modifie la valeur de consigne d'au moins un paramètre opératoire, notamment la course de friction, la durée de friction, la durée de l'arc électrique ou l'effort de refoulement, en compensant l'écart ∆l de longueur déterminée par une modification de la plastification et par une modification de la course de refoulement et pour régler leur rapport de répartition pour la modification du paramètre opératoire en déterminant un facteur C de correction par lequel l'écart ∆l de longueur est multiplié.

**2.** Procédé suivant la revendication 1, **caractérisé en ce qu'**on obtient le facteur C de correction empiriquement dans des séries d'essais.

**3.** Procédé suivant la revendication 1 ou 2, **caractérisé en ce que** l'on détermine le facteur C de correction en fonction de l'application.

**4.** Procédé suivant la revendication 1, 2 ou 3, **caractérisé en ce que** l'on effectue les séries d'essais spécifiquement à l'application sur des pièces échantillons de la charge de série.

**5.** Procédé suivant l'une des revendications précédentes, **caractérisé en ce que**, lors de la détermination du facteur C de correction, on tient compte de la qualité de la soudure.

**6.** Procédé suivant l'une des revendications précédentes, **caractérisé en ce que** l'on détermine et mémorise les limites supérieures et inférieures des écarts $\Delta l$ de longueur et des facteurs de correction associés en déterminant lorsque le soudage fonctionne par interpolation dans cette plage le facteur C de correction des écarts $\Delta l$ de longueur mesurés.

**7.** Procédé suivant l'une des revendications précédentes, **caractérisé en ce que**, dans le soudage par friction ayant une commande du trajet de friction, on calcule une variation $\Delta s$ du trajet de friction comme étant le produit d'un facteur Cs de correction par les écarts $\Delta l$ de longueur.

**8.** Procédé suivant l'une des revendications précédentes, **caractérisé en ce que**, dans le soudage par friction ayant une commande de la durée de friction, on calcule une variation $\Delta t$ de la durée de la friction comme étant le produit d'un facteur Ct de correction par les écarts $\Delta l$ de longueur.

**9.** Procédé suivant l'une des revendications 1 à 5, **caractérisé en ce que**, dans le soudage par friction ayant une commande d'une durée courte, on calcule une variation $\Delta p$ de la course de refoulement comme étant le produit d'un facteur Cp de correction par les écarts $\Delta l$ de longueur.

**10.** Procédé suivant la revendication 9, **caractérisé en ce que** l'on modifie l'effort de refoulement.

**11.** Procédé suivant l'une des revendications précédentes, **caractérisé en ce que** l'on modifie le paramètre opératoire dans sa caractéristique, notamment par un profil de paramètre variant dans le temps et/ou dans l'espace.

**12.** Procédé suivant l'une des revendications précédentes, **caractérisé en ce que** l'on mémorise des valeurs C de correction déterminées ayant des indications de référence pour les pièces (2, 3) dans une banque de données pouvant être reliée à la machine (1) de soudage par pression.

**13.** Dispositif (1) de soudage par pression, de préférence de soudage par friction ou de soudage à l'arc magnétique, de pièces (2, 3) ayant une unité (7) d'avance, une commande (13) et un dispositif (12) de mesure pour la détermination de la longueur réelle d'une ou de deux pièces (2, 3) et d'un écart $\Delta l$ de longueur, dans lequel, dans la commande (13), on peut, lors d'un écart $\Delta l$ de longueur, modifier une valeur de consigne par au moins un paramètre opératoire, **caractérisé en ce que** la commande (13) a une unité (14) de calcul pour établir et modifier des valeurs de consigne dans lequel, s'il se produit un écart $\Delta l$ de longueur, une valeur de consigne peut être modifiée par au moins un paramètre opératoire, notamment par le trajet de friction, la durée de friction, la durée de l'arc électrique ou l'effort de refoulement, l'écart $\Delta l$ de longueur déterminé pouvant être compensé par une modification de la plastification et par une modification de la course de refoulement et pour établir leur rapport de répartition pour la modification du paramètre opératoire, il est prévu un facteur C de correction et dans lequel l'unité (14) de calcul de la commande (13) est conçue pour l'établissement et la modification de valeurs de consigne en tenant compte du facteur C de correction d'au moins un paramètre opératoire.

**14.** Dispositif (1) suivant la revendication 13, **caractérisé en ce que** la commande (13) peut être programmée, l'unité (14) de calcul étant reliée à au moins une mémoire (15) et ayant un programme de détermination, notamment d'interpolation du facteur C de correction à partir des valeurs prescrites mémorisées.

# Fig. 1

Fig. 2

Fig. 3

Fig. 4

Fig. 5

(Weg-Reiben mit Längenkompensation)

Weg [s]
Drehzahl [n]
Druck [p]

Zeit [t]

EP 1 641 586 B1

# Fig. 6

(Zeit-Reiben mit Längenkompensation)

Weg [s]

Drehzahl [n]

Druck [p]

EP 1 641 586 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3998373 A
- DE 3413203 C2
- JP 3268884 A
- US 2988936 A
- DE 4135882 A1
- WO 9701412 A